# EUROPEAN PATENT SPECIFICATION

(11) **EP 4 668 178 B1**
(45) Date of publication and mention of the grant of the patent: **29.04.2026**
(21) Application number: 24398012.5
(22) Date of filing: 20.06.2024
(51) Int. Cl.: G06Q 10/02, G06Q 50/00, G06Q 50/14, G06N 20/00

(54) **PROCESS FOR ORGANIZING TOURS AND ACTIVITIES**
VERFAHREN ZUM ORGANISIEREN VON TOUREN UND AKTIVITÄTEN
PROCÉDÉ D'ORGANISATION DE VISITES ET D'ACTIVITÉS

(43) Date of publication of application: 24.12.2025
(73) Proprietor: Holiday Senses Sensations Lda., 1070-129 Lisboa (PT)
(72) Inventor: Oliveira Leite, José Hugo, 2705-069 Colares, Sintra (PT)
(74) Representative: Couto, Cláudia

(56) References cited:
- JP-A- 2020 140 414
- US-A1- 2006 190 309
- US-A1- 2019 318 276

## Description

### Technical Field

The present application describes Technical Details and Techniques of a Process for Auto Organizing Tours and Activities that for two or more groups of people, that do not necessarily know themselves, but are willing to join together receiving benefits (either tangible and/or intangible) from it. It makes part of this application and process the organization of Resellers, Resellers Establishments, Resellers Staf and Resellers Customers (generically called Entities) in a way that they contribute as best as it can achieved to the Auto Organization of the referred Tours and Activities also receiving benefits from it.

### Background art

In what Tourism Tours and Activities are concerned, services are nowadays offered by the Tour Operators in two ways.

The first way is to provide a Ticket to a user, offering a Place (or a seat) in a predefined Tour or Activity that will take place if a certain minimum number of people is reached. These are normally mass-market Tours and Activities and seldom offer any differentiation or personalization. The Tour Operator finds here a way to make profit by volume of sales.

The second one is by means of Private Tours or Activities. These are the solutions where the Tour Operator offers

Privacy, Intimacy, and normally also more comfort, and in certain situations, can even attend better to special requests of its customers, and is the embodiment in which the present application falls.

Document JP2020140414A discloses an event management system capable of attracting customers, managing attendance, and collecting money for an event. SOLUTION: An event management system 1 has a server 2, an organizer terminal 3, and a participant terminal 4. When an organizer operates the organizer terminal 3 to create an event, event information including an event name, a date and time of the event, venue, and a participation fee is stored in the server 2, and these pieces of event information are displayed on the participant terminal 4. A participant operates the participant terminal 4 to express intention to participate and inputs payment information. This information is transmitted to the server 2, the payment is made on the server 2, and the participant is given the right to participate in the event.

Document US2006190309 discloses a reservation and management system for recreational activities offered by a plurality of activity operators, comprises a database for storing information regarding a plurality of recreational activities, including inventory information and a financial record containing financial information, for reservation transactions carried out for said activity and profile information for a plurality of subscribers, including activity operators and resellers. The system includes a reservation information compiler for providing information for an activity, a transaction module for updating inventory information and financial record following a reservation transaction request. A plurality of purchase modules are also provided, allowing clients and resellers to access information and make reservation for activities. An operator inventory management module allows to receive and update activity information.

Document US2019318276 discloses an automated system for real time booking geared towards local attractions. The system includes a server that maintains data structures corresponding to a booking list and an ordered standby list. The booking list and the standby list have entries identifying at least one participant or item. The server receives input identifying a booking entry in the booking list to be cancelled and in response to receiving the input identifying the booking entry to be cancelled, retrieves a top entry of the ordered standby list, replaces the booking entry to be cancelled in the booking list with the top entry, and removes the top entry from the standby list.

### Summary of the Invention

The present invention describes a Computer-implemented Process to organize groups of customers in private tours or activities characterized by comprising the steps of Receiving a request from a customer group to create a premium tour or activity in an area or region; Identifying entities to notify next in the creation process of such tours and activities and notify them and notify them; Determining and initiating necessary timers to facilitate the creation process; Waiting for additional customer groups to join in to meet participation thresholds; Notifying additional entities as needed so that the premium tour or activity gains sufficient participants; Determining the optimal day and time for booking the premium tour or activity; Conducting the premium tour or activity at the scheduled day and time, or if a common day and time is no longer available, notifying all parties and initiating refund processes; Calculating credits to refund in the event eventual different prices per person are paid by the different groups that joined; Notifying all involved parties of successful scheduling of the Premium Tour or Activity, and initiating refund processes as necessary.

In a proposed embodiment of present invention, the entities comprise Resellers, Resellers Establishments, Resellers Recommendation Staff, "direct" Customers and also Tour Operators using the company direct brand website, and/or Applications and/or Apps Software.

Yet in another proposed embodiment of the present invention, the area or region it comprises is a set of Geographical Area Networks, like for example, Geographical Area #1 Network and/or Geographical Area #2 Network and/or Geographical Area #3 Network up to and/or Geographical Area #n Network, where the reference #n represents an infinite number of possibilities.

Yet in another proposed embodiment of present invention, the Geographical Area Network comprises a set of Resellers, Reseller Establishments, Resellers Recommenders, Reseller Customers, Tour Operators and Area "direct" Costumers.

Yet in another proposed embodiment of present invention, the Resellers comprise at least one Reseller establishment, one Recommender from Resellers linked to Customers from Resellers and up to an infinite (#n) range of Reseller Establishments and Recommenders.

Yet in another proposed embodiment of present invention, the computer-implemented process is implemented locally and/or remotely over the Internet or over an internet network which is connected to the set of Geographical Area Networks which comprises Application Servers and/or Database Servers and/or File Servers and/or Machine Learning (ML) Recommendation System Engine(s) And Machine Learning (ML) Customer and other Entities Categorization Engine(s).

Yet in another proposed embodiment of present invention, the computer-implemented process is implemented spread up locally and/or remotely over several networks which are connected between themselves through the Internet and/or one or more internets and also connected through the Internet and/or internets to the set of Geographical Area Networks which comprises Application Servers and/or Database Servers and/or File Servers and/or Machine Learning (ML) Recommendation System Engine(s) And Customer and other Entities Categorization Engine(s).

The present invention still discloses a data processing system, characterized by comprising the physical means necessary for the execution of the computer-implemented system and computer-implemented process described in any one of the preceding paragraphs.

The present invention still discloses one or more computer programs (for example computer-programs to be stored in the servers with different purposes like Business Logic Servers, Machine Learning (ML) Engine(s) Servers, computer-programs to be stored in mobile devices like Mobile Apps or Desktop or Laptop PC Apps, etc.), characterized by comprising programming code or instructions suitable for carrying out the computer-implemented process described in any of the preceding paragraphs, in which said computer program is stored, and is executed in a data processing system, remote or in-site, for example but not limited to a single server, one or a set of load balanced pool of servers, one or more application servers farms, or any kind of distributed computing-system, performing the respective steps described in the above paragraphs.

The present invention still discloses a computer readable physical data storage device, in which the programming code or instructions of the computer program(s) are stored.

### General Description

The main goal of the present application is to disclose a methodology (a process) to Auto Organize Tours and Activities, that in nature are offered as a Private solution for a group of people that know themselves, amongst two or more groups of people that do not necessarily know themselves, but are willing to join together receiving benefits (either tangible and/or intangible) from it and benefiting from all the Comfort, Intimacy and Personal Care these kind of Tours and Activities normally offer.

The computer implemented process resorts to the use of varied computing machine types and Communication Networks at its disposal as a means of communication between all parties involved in the operationality of the procedure.

One of the goals of the developed computer implemented process is to reduce the average Cost per Person of these leisure and/or vacation Tours and Activities making them affordable to more users, and so, increasing the potential market and increase largely the benefits of the Customer and the Tour Operators seeking for a differentiated offer.

In the end, the user/Customer will benefit from a reduced cost per person, and the Tour Operators will obtain Higher Value Sales and Increase of these Sales Frequency.

In summary, the current application reveals a system and process to generate shared private tours in an area or region (amongst the software system users/Customers).

An Area, in the general concept of the current application, is a geographical tourism area. It can be related to a City, a Region centered at a given point in a map that can be defined by a frontend or a backend software application, and within a range in Kilometers (or Miles) also defined by the internal processing algorithms of the developed computer implemented process.

Considering a FIRST USE CASE where there are NO RESELLERS IN THE AREA DETERMINED BY THE USER/CUSTOMER.

The usual "direct" customer of the computer implemented process to generate groups of users for shared private tours, will chose, by means of a frontend app (whether it be a website, an application, app or any other kind of software) to create a new selection on a particular service designated by "Premium Tour or Activity" in a given tourism area which the Customer is visiting or is willing to visit.

In addition to this selection, the Customer will choose a range of dates and times or particular date and time in which he/she is willing to experience that Premium Tour or Activity, and also the occupancy (the maximum and minimum of people) the Customer finds acceptable for that matter.

If the date when the creation of the new selection on a particular service is close to the first date selected for the "Premium Tour or Activity" to take place (the computer-implemented method will define how close it is according to a set of criteria defined in the Computer-implemented process), some, or all the users of the frontend app, traveling in within the same Area will then be notified based on a predefined criteria of who to notify.

The computer implemented process to generate groups of users for shared private tours enables the automatic organization of all the groups of customers that participate in that selected service "Premium Tour or Activity", and if the minimum number of participants is reached, to ensure the event execution, the best common date and time for all groups is Set (or Booked) in the Tour Service provider (Tour Operator).

In case of the minimum number of people is not achieved by the last possible date and time determined for the Premium Tour or Activity to take place, then, all the customers that have already paid the Premium Tour or Activity are automatically refunded to their corresponding Bank Accounts.

In a SECOND USE CASE, it should be considered that THERE ARE RESELLERS IN THE AREA DETERMINED BY THE USER/CUSTOMER, and that the INITIATING RESELLER HAS ONLY ONE ESTABLISHMENT IN THAT AREA.

In the case of customers, via frontend app, choosing the resellers to Initiate or joining a Premium Tour or Activity, it is to be assumed that the mentioned customers are already physically located in said Area. The customer will then decide the dates and times he/she is willing to experience that Tour or Activity, and the occupancy (i.e., the maximum and minimum of people) he/she finds acceptable for that service.

All the reseller staff members that are registered as Tour or Activities recommenders for that reseller are notified that there is a New Premium Tour or Activity initiated in that reseller.

A given time is provided for that reseller and its Recommenders to find more groups willing to join that Premium Tour or Activity. That given time depends on several variables, one of them being the first date selected for the possibility of the Premium Tour or Activity to take place. This makes part of the developed computed implemented process, as well as the criteria to calculate the last possible date and time for a successful Premium Tour or Activity reservation (or Booking).

Within this second use case two scenarios may arise.
- In a POSSIBLE SCENARIO THE RESELLER FINDS MORE GROUPS AMONGST ITS CLIENTS AND CAN CLOSE ALL PLACES IN THE PREMIUM TOUR OR ACTIVITY. The developed computer implemented process algorithms will automatically organize the groups of people/customers that participate in that Premium Tour or Activity, and if the minimum number of participants is reached the best common date and time for all groups is Reserved (or Booked) in the Tour Operator. Any refunds will be determined if applicable.
- In ANOTHER SCENARIO, THE RESELLER DOES NOT FIND ENOUGH GROUPS AMONGST ITS CLIENTS TO CLOSE ALL PLACES IN THE PREMIUM TOUR OR ACTIVITY IN THE GIVEN TIME DEFINED BY COMPUTER IMPLEMENTED PROCESS. In this case, all the other resellers in that Tourism Area, along with all their staff members that registered as Tour or Activities recommenders for those resellers, are notified that there is a New Premium Tour or Activity initiated in that Tourism area. Also, some or all the "direct" users/Customers of the frontend app traveling in the Area are notified (the criteria of who to notify is defined by a developed computer implemented method). The algorithms under the computer implemented process enable to automatically organize the groups of people that participate in that Premium Tour or Activity, and if the minimum number of participants is reached the best common date and time for all groups is Reserved (or Booked) in the Tour Operator. Any refunds are calculated if applicable.
- In ALL THE GIVEN CASE SCENARIOS, when the minimum number of participants for a Premium Tour or Activity is not reached by the last date and time possible for a successful reservation (or booking), the groups that have already paid are fully refunded of the amount paid to their corresponding Bank Accounts. The criteria to calculate the last possible date and time for a successful Premium Tour or Activity reservation (or Booking) is determined within the computer implemented method.

In a THIRD USE CASE, there are considered RESELLERS IN THE CHOSEN AREA AND THE INITIATING RESELLER HAS MORE THAN ONE ESTABLISHMENT IN THAT AREA.
- In a POSSIBLE SCENARIO of this third use case, A RESELLER CHOOSES TO BENEFIT THE ESTABLISHMENT THAT INITIATED THE PREMIUM TOUR OR ACTIVITY. In the case of customers using resellers to Initiate or joining a Premium Tour or Activity it is assumed that those customers are already physically in that Tourism Area. So, a Customer of that Reseller Establishment "create a new Premium Tour or Activity" in that Tourism Area through the frontend app. With that the Customer decides the dates and times in which he/she is willing to experience that Tour or Activity and the occupancy (the maximum and minimum of people) he/she finds acceptable for that matter. All the reseller staff members that registered as Tour or Activities recommenders for that reseller establishment are notified that there is a New Premium Tour or Activity initiated in that reseller establishment. A given time is provided for that reseller establishment and its recommenders to find more groups willing to join that Premium Tour or Activity. That given time depends on several variables, one of them being the first date selected for the possibility of the Premium Tour or Activity to take place. The criteria to calculate the last possible date and time for a successful Premium Tour or Activity reservation (or Booking) is determined within the computer implemented method.
- In ANOTHER SCENARIO, THE RESELLER ESTABLISHMENT MAY FIND MORE GROUPS AMONGST ITS CLIENTS AND CAN CLOSE ALL PLACES IN THE PREMIUM TOUR OR ACTIVITY. The computer implemented method algorithms will automatically organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO, THE RESELLER ESTABLISHMENT DOES NOT FIND ENOUGH GROUPS AMONGST ITS CLIENTS THAT CAN CLOSE ALL PLACES IN THE PREMIUM TOUR OR ACTIVITY. In this case, all the other reseller establishments from that reseller in that Tourism Area, along with all their staff members that registered as Tour or Activities recommenders for those reseller establishments, are notified that there is a New Premium Tour or Activity initiated in that Tourism area. A given time is provided for those reseller establishments and its recommenders to find more groups willing to join that Premium Tour or Activity. That given time depends on several variables, one of them being the first date selected for the possibility of the Premium Tour or Activity to take place. The criteria to calculate the last possible date and time for a successful Premium Tour or Activity reservation (or Booking) is determined within the computer implemented method.
- In ANOTHER SCENARIO, THE RESELLER ESTABLISHMENTS MENTIONED IN THE PREVIOUS SCENARIO DO FIND ENOUGH GROUPS AMONGST ITS CLIENTS THAT CAN CLOSE ALL PLACES IN THE PREMIUM TOUR OR ACTIVITY. The computer implemented method algorithms auto organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO, THE RESELLER ESTABLISHMENTS MENTIONED PREVIOUSLY CANNOT FIND ENOUGH GROUPS AMONGST ITS CLIENTS THAT CAN CLOSE ALL PLACES IN THE PREMIUM TOUR OR ACTIVITY IN THE TIME GIVEN BY THE FRONTEND APP. In this case, all the other resellers in that Tourism Area, along with all their staff members that registered as Tour or Activities recommenders for those resellers, are notified that there is a New Premium Tour or Activity initiated in that Tourism area. Also, some or all the "direct" users/Customers of the frontend app traveling in the Area are notified (the criteria of who to notify is defined by a computer implemented method Algorithm). The computer implemented method algorithms are configured to automatically organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO, THE RESELLER MENTIONED IN THE FIRST SCENARIO DOES NOT CHOOSE TO BENEFIT THE ESTABLISHMENT THAT INITIATED THE PREMIUM TOUR OR ACTIVITY. In this case, all the other reseller establishments from this late reseller in that Tourism Area, along with all their staff members that registered as Tour or Activities recommenders for those reseller establishments, are notified that there is a New Premium Tour or Activity initiated in that Tourism area. A given time is provided for those reseller establishments and its recommenders to find more groups willing to join that Premium Tour or Activity. That given time depends on several variables, one of them being the first date selected for the possibility of the Premium Tour or Activity to take place. The criteria to calculate the last possible date and time for a successful Premium Tour or Activity reservation (or Booking) makes also part of the computer implemented method algorithms.
- In ANOTHER SCENARIO, THE RESELLER ESTABLISHMENTS MENTIONED IN THE PREVIOUS SCENARIO DO FIND ENOUGH GROUPS AMONGST ITS CLIENTS THAT CAN CLOSE ALL PLACES IN THE PREMIUM TOUR OR ACTIVITY. The computer implemented method algorithms auto organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO, THE RESELLER ESTABLISHMENTS MENTIONED ABOVE CANNOT FIND ENOUGH GROUPS AMONGST ITS CLIENTS THAT CAN CLOSE ALL PLACES IN THE PREMIUM TOUR OR ACTIVITY IN THE TIME GIVEN BY THE COMPUTER IMPLEMENTED METHOD. In this case, all the other resellers in that Tourism Area, along with all their staff members that registered as Tour or Activities recommenders for those resellers, are notified that there is a New Premium Tour or Activity initiated in that Tourism area. Also, some or all the "direct" users/Customers of the frontend app traveling in the Area are notified (the criteria of who to notify is defined by a computer implemented method Algorithm). The computer method implemented algorithms are configured to automatically organize the groups of people that participate in that Premium Tour or Activity, and if the minimum number of participants is reached the best common date and time for all groups is Reserved (or Booked) in the Tour Operator. Any refunds are calculated if applicable.
- For ALL THE PREVIOUS SCENARIOS, when the minimum number of participants for a Premium Tour or Activity is not reached by the last date and time possible for a successful reservation (or booking), the groups that have already paid are fully refunded of the amount paid to their corresponding Bank Accounts. The criteria to calculate the last possible date and time for a successful Premium Tour or Activity reservation (or Booking) makes part of the computer implemented method algorithms.

In a FOURTH USE CASE, THERE ARE RESELLERS IN THE AREA WORKING IN THE AREA DETERMINED BY THE USER/CUSTOMER BUT THE PREMIUM TOUR OR ACTIVITY IS INITIATED BY A CUSTOMER USING THE "DIRECT" SOFTWARE APP AND NOT BY A RESELLER CUSTOMER SOFTWARE. A customer using the "direct" frontend software app (be it its website, an application, mobile app or any other kind of software) decides to "create a new Premium Tour or Activity" in the given tourism area the Customer is visiting or willing to visit. With that, the Customer decides the dates and times in which he/she is willing to experience that Tour or Activity and the occupancy (the maximum and minimum of people) he/she finds acceptable for that matter. If the present date (date that the Tour or Activity is "created") is close to the first date and time selected for the Premium Tour or Activity to take place (the computer-implemented software process will define what close is according to a set of criteria of its choice), some or all the "direct" users of the frontend Software app traveling in the Area are notified (the criteria of who to notify is defined by a computer implemented method Algorithm).

A given time is provided for Software implemented process to find more groups willing to join that Premium Tour or Activity. That given time depends on several variables, one of them being the first date selected for the possibility of the Premium Tour or Activity to take place. This makes part of the developed computer implemented method algorithms. The criteria to calculate the last possible date and time for a successful Premium Tour or Activity reservation (or Booking) also makes part of the computer implemented method algorithms.
- In a POSSIBLE SCENARIO, ENOUGH GROUPS OF CUSTOMERS TO FILL IN ALL THE PREMIUM TOUR OR ACTIVITY PLACES ARE FOUND IN THE GIVEN TIME. The computer implemented Software Method algorithms auto organize the groups of people that participate in that Premium Tour, and if the minimum number of participants is reached the best common date and time for all groups is Reserved (or Booked) in the Tour Operator. Any refunds are calculated if applicable.
- In ANOTHER SCENARIO, NOT ENOUGH GROUPS OF PEOPLE JOIN THE PREMIUM TOUR OR ACTIVITY AND ONLY SOME OF THE RESELLER ESTABLISHMENTS ARE ELIGIBLE TO BE NOTIFIED IN A FIRST PHASE. In this case, all the eligible reseller establishments in that Tourism Area, along with all their staff members that registered as Tour or Activities recommenders for those reseller establishments, are notified that there is a New Premium Tour or Activity initiated in that Tourism area. A given time is provided for those reseller establishments and its recommenders to find more groups willing to join that Premium Tour or Activity. That given time depends on several variables, one of them being the first date selected for the possibility of the Premium Tour or Activity to take place. The criteria to calculate the last possible date and time for a successful Premium Tour or Activity reservation (or Booking) makes part of the computer implemented method algorithms.
- In ANOTHER SCENARIO, ENOUGH GROUPS AMONGST THE RESELLER ESTABLISHMENTS ABOVE ARE FOUND THAT CAN CLOSE ALL PLACES IN THE PREMIUM TOUR OR ACTIVITY IN THE GIVEN TIME. The computer implemented Software method algorithms auto organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO, NOT ENOUGH GROUPS ARE FOUND AMONGST THE RESELLER ESTABLISHMENTS ABOVE THAT CAN CLOSE ALL PLACES IN THE PREMIUM TOUR OR ACTIVITY IN THE GIVEN TIME. In this case, all the other reseller establishments in that Tourism Area, along with all their staff members that registered as Tour or Activities recommenders for those resellers, are notified that there is a New Premium Tour or Activity initiated in that Tourism area. Enough Groups of Customers join the Premium Tour or Activity, and enough places are filled. The computer implemented Software method algorithms auto organize the groups of people that participate in that Premium Tour or Activity, and if the minimum number of participants is reached the best common date and time for all groups is Reserved (or Booked) in the Tour Operator. Any refunds are calculated if applicable.
- In ANOTHER SCENARIO (A VARIANT OPTION TO THE SECOND SCENARIO), NOT ENOUGH GROUPS OF PEOPLE JOIN THE PREMIUM TOUR OR ACTIVITY AND ALL OF THE RESELLER ESTABLISHMENTS ARE ELIGIBLE TO BE NOTIFIED IN A FIRST PHASE. In this case, all the reseller establishments in that Tourism Area, along with all their staff members that registered as Tour or Activities recommenders for those reseller establishments, are notified that there is a New Premium Tour or Activity initiated in that Tourism area. The computer implemented Software method algorithms auto organize the groups of people that participate in that Premium Tour or Activity, and if the minimum number of participants is reached the best common date and time for all groups is Reserved (or Booked) in the Tour Operator. Any refunds are calculated if applicable.
- NOTE FOR ALL THE PREVIOUS SCENARIOS: When the minimum number of participants for a Premium Tour or Activity is not reached by the last date and time possible for a successful reservation (or booking), the groups that have already paid are fully refunded of the amount paid to their corresponding Bank Accounts. The criteria to calculate the last possible date and time for a successful Premium Tour or Activity reservation (or Booking) makes part of the computer implemented method algorithms.

All the scenarios above can be extended with more levels of entities to be notified ("direct" customers, resellers, reseller establishments, reseller establishments staff registered as recommenders, etc.). This is, the USE CASES and SCENARIOS ABOVE do not limit the implementation of the referred process that can be further extended with USE CASES and SCENARIOS but are the necessary basis for its implementation. An obvious extension is to extend to Resellers and Reseller establishments that are not a physical entity but offer our services in the Tourism Area or Region in question in a digital and/or online place. In that case, as in USE CASE ONE and USE CASE FOUR, the Customer may be or not already physically in the Tourism Area in question and a similar approach to our "direct" Customers may or may not be used (depending on the reseller in question).

Some BENEFITS FOR THE RESELLERS are now disclosed. Besides an agreed fee on each sale, each reseller will benefit from an LTV (Lifetime Value) bonus assigned to it. I.e., the Computer implemented software Process will calculate the value a Reseller brings to the developed Ecosystem, and this software process will reward a Reseller for future purchases on the company Ecosystem of a Customer introduced to the same Ecosystem by that same Reseller. That bonus is calculated according to a software algorithm and takes in accounts variables like, place of purchase (directly to website or Apps or if it is in another reseller), margin related with that service (it can be a Tour or Activity or another kind of Service as defined by the software computer implemented process algorithms), frequency that that Customer buys in the Ecosystem, frequency that all Customers acquired by that reseller buy in Ecosystem, number of Customers acquired by that reseller to the Ecosystem, any other factors not referred here that may be found of relevance.

Some BENEFITS FOR THE CUSTOMERS are now disclosed. The Customer benefits from a Premium Tour or Activity. The Customer benefits from the possibility of tailoring that Tour or Activity to his/her Group Tastes especially if the Customer is the initiator of the Premium Tour or Activity. The joining Groups of Customers also benefit from reduced cost per person and will be able to choose from more than one Premium Tour or Activity in the Area, choosing the one that best fits their tastes and pockets. No customer will pay more per a Premium Tour or Activity than the minimum Price per Person defined by the developed computer implemented software process Algorithms. If by any chance the Customer paid more than that minimum price per person at the time he/she paid the Premium Tour or Activity, when this Tour or Activity is closed and Booked, that Customer will be "rewarded" of the difference between the minimum price per person and the price per person he/she paid before the Premium Tour or Activity was closed and Booked. This price per person will depend obviously amongst other factors on the final number of people that joined that Premium Tour or Activity.

Following, some CONSIDERATIONS ON "GIVEN TIMES" (timers) are provided. The "Given Times" described on the use cases are "windows" of time related to the referred Entities involved in Joining and Booking Customer Groups to the Premium Tour or Activity to try to close as many places as they can in that same Premium Tour or Activity. In other words, the time during which it has preference for acquiring places in that Tour or Activity. These Entities can be but are not limited to, Resellers, Resellers Establishments, Resellers Recommendation Staff, "direct" Customers using the website, Applications or Apps Software and also Tour Operators. As observed in the several Use Cases there may be several layers of preference assigned either to the computer implemented Software process "direct sales" (to the "direct" end user/Customer) or to any Reseller Establishment, Reseller entity (with one or more establishments) or Group of Resellers as well as their Recommendation Staff. The algorithm to establish these timers is dynamic, and as said before, takes in consideration the first possible date and/or time for the Private Tour or Activity to take place, as well as other variables like for example but not limited to the Area the Customer is at, the speed in which more groups are joined to the premium tour, number of potential customers of a Reseller and its establishments, a direct agreement with the Reseller, number of "direct" Software app users Traveling in the Area, their traveling tastes, category or categories they fit in, and in GDPR or similar regulated areas, if the customer chose to (opt in) to be notified, etc.. This computer implemented method also depends on de inputs received from Machine Learning (ML) Customer and other Entities (like Resellers, etc.) Categorization Engine(s).

Following, some CONSIDERATIONS ON "REFUNDS" are provided, and which are defined by two types.

The first type of refund is a refund when by the last date and time for a successful Booking of that Premium Tour or Activity a minimum number of people is not reached to fill in the minimum capacity defined for that Premium Tour or 0 Activity. In this case all the Customers that have already paid that Premium Tour or Activity are refunded immediately to their respective Bank Accounts, using for that the payment method the Customer selected.

The second type of refund is more complex. After all the final places of a Premium Tour or Activity are filled in and the Tour paid and Booked, the developed computer implemented method algorithm calculates the final minimum price per person. The groups that initially submitted a payment that is more than that minimum price per person will be assigned an amount of credits in the currency paid for the Premium Tour or Activity. That amount of credits is kept in an virtual Ecosystem account or wallet, or in the customer Reseller establishment account or wallet or both, for a defined time to cover the time that the Customer is traveling in the Area. That way the customer can spend those credits in other Resellers services like for example in another Tour or Activity booking, Premium or not. Those credits can be used to discount on the price of the previously mentioned tour, or if a reseller is, for example, an Hotel, Hotel services can also be ordered and paid with those credits (like room service, Bar, SPA, Restaurant, etc.). In fact, a multitude of Use Cases for those Assigned Credits can be found. If after a given time, predetermined by the computer software algorithm, the user did not spend in any way all the assigned credits, the Customer can choose to be refunded. This refund will be done directly to the Customer's Bank Account using the payment method previously selected by the Customer.

Following, some CONSIDERATIONS ON THE DETERMINATION AND BOOKING OF THE BEST COMMON DAY AND TIME FOR ALL PREMIUM TOUR OR ACTIVITY CUSTOMERS OR CUSTOMER GROUPS THAT JOINED are provided. A very important part of this invention disclosure is the automatic calculation of the best day and time for all the groups of customers that joined the Premium Tour or Activity to experience that service. The base concept shall work in a way that the Customer that initiated the Premium Tour or Activity selects the days and times his/her group is willing to experience that service. Those days and times become defined as the days and times in which all the other groups can include themselves (in fact this can take a more complex approach, for example if the initiator of the Premium Tour or Activity leaves the attempt to form the Tour or Activity, in that case the range of days and times that the second group that has joined the Tour or Activity has selected takes preference, and so forth). All the other groups that join the Premium Tour or Activity must have at least one common day and time with the "owner" (the group that initiated or took its place) of the Premium Tour or Activity. When the conditions are met (enough people found) to Book the Premium Tour or Activity, the first common day and time for all the groups is attempted to be booked. If by any chance that day and time was meanwhile booked by someone else in the Tour Operator (either by any other Ecosystem customer or another company), the next common and available day and time is found and the Premium Tour or Activity Booked for that day and time. If by any chance the algorithm by the time of Booking finds no available possible day and time to Book despite the previous reservation of a range of days and times, all the groups will be notified of the occurrence and refunded of the amount paid to their respective Bank Accounts and using the Customer's selected payment method.

Other important concepts relate with Resellers, Reseller Establishments, Reseller or Reseller Establishments Recommenders and Reseller and Reseller Establishments Customers.

Resellers are to be defined as partners that make all or some of the Tours or Activities available in Holiday Senses Ecosystem through them using this computer implemented software process in the way Holiday Senses makes it available to them. They can be Hotel Chains, Airlines, or any other company type including companies only with digital footprint (ex: only with online sales channel) or both.

Reseller Establishments are to be defined as for example an Hotel belonging to an Hotel Chain, a balcony at an Airport of an Airline Company, or any other physical or online (digital) establishment like an online Travel Agency, or any other kind of online marketplace (ex: a Tour Operator website or any Online Tourism Agency) with presence in the Tourism Geographical Area in concern.

Reseller or Reseller Establishments Recommenders are to be considered as the contact people selected by the Reseller or Establishment to address their customers and suggest our Tours and Activities. Can be a front-desk receptionist at a Hotel or a bartender, an Airline Receptionist or Stewardess, or any other person the Reseller or the Establishment finds relevant.

Reseller and Reseller Establishments Customers are to be considered as the Customers using the Ecosystem Software that comes directly from the contact with a Reseller Establishment or its Recommenders.

### Brief description of the drawings

For better understanding of the present application, figures representing preferred embodiments are herein attached which, however, are not intended to limit the technique disclosed herein.

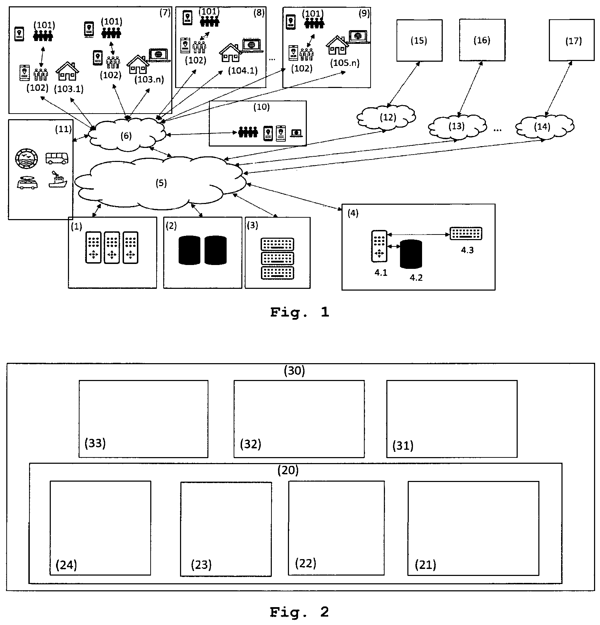

Fig. 1 - discloses a possible embodiment of the overall structure and data exchange flow of the current invention, where the reference numbers relate to:
   1 - Application Servers - may comprise at least one server machine and may be composed of more sets of server computing machines (for example in one or more sets load balanced pool(s) of servers or server farms);
   2 - Database Server(s);
   3 - File Server(s);
   4 - Machine Learning (ML) Recommendation System, Customer Categorization and Other Entities Categorization Engine(s);
   4.1 - Application Server(s), also as described in 1;
   4.2 - DB Server(s);
   4.3 - File Server(s);
   5 - Network;
   6 - Geographical Area #1 Network;
   7- Reseller #1 in Geographical Area #1;
   8 - Reseller #2 in Geographical Area #1;
   9 - Reseller #n in Geographical Area #1;
   10 - Area #1 Customers using the "direct" front-end software;
   11 - Tour operators using the back-end software;
   12 - Geographical Area #2 Network;
   13 - Geographical Area #3 Network;
   14 - Geographical Area #n Network;
   15 - Geographical Area #2 Network Resellers, Reseller Establishments, Resellers Customers, "direct" Customers and Tour Operators;
   16 - Geographical Area #3 Network Resellers, Reseller Establishments, Resellers Customers, "direct" Customers and Tour Operators;
   17 - Geographical Area #n Network Resellers, Reseller Establishments, Resellers Customers, "direct" Customers and Tour Operators;
   101 - Customers from Resellers;
   102 - Recommenders from Resellers;
   103.1 - Geographical Area #1 Reseller #1 Establishment #1;
   103.n - Geographical Area #1 Reseller #1 Establishment #n;
   104.1 - Geographical Area #1 Reseller #2 Establishment #1;
   105.n - Geographical Area #1 Reseller #n Establishment #n;
Fig. 2 - discloses a possible embodiment of the functional layers of the current invention, where the reference numbers relate to:
   20 - Layer 1;
   21 - Machine Learning (ML) Customer and Other Entities Categorization Engine(s);
   22 - Timers (Given Times) Calculation Software Module;
   23 - Entities (Resellers, Reseller Establishments, Resellers Staff, Direct Customers, Tour Operators) Notification Determination Software Module;
   24 - Software Module that Calculate the Last Possible Date and Time and the Best Common Date and Time that a Premium Tour or Activity can Take Place;
   30 - Layer 2;
   31 - Premium Tour or Activity Groups Auto-Organizing Software Module;
   32 - Premium Tour or Activity Auto-Booking Software Module;
   33 - Entities Benefits Calculation and Attribution Software Module;

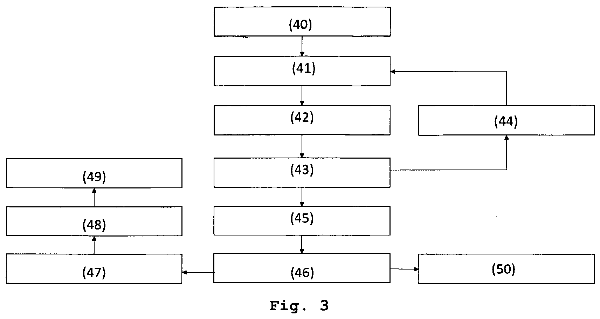

Fig. 3 - discloses a possible embodiment of the workflow of the current invention, where the reference numbers relate to:
   40 - Creation of a Premium Tour or Activity by a Customer Group;
   41 - Identification of what Entities to Notify Next and Notify Them;
   42 - Determination and Starting of the Necessary Timers;
   43 - Waiting for More Customer Groups to Join In;
   44 - Its Necessary to Notify More Entities;
   45 - Premium Tour or Activity Has Enough Customers;
   46 - Determine Best Day and Time to Book;
   47 - Best Day and Time found, Premium Tour or Activity is Booked;
   48 - Calculate Credits to Refund and Reseller(s) benefits;
   49 - Notify All Relevant Parties;
   50 - A Common Day is no Longer Available Notify All Relevant Parties and Refund;

### Description of Embodiments

With reference to the figures, some embodiments are now described in more detail, which are however not intended to limit the scope of the present application.

As described before, in the field of Tourism Tours and Activities, a rising need as emerged for Auto Organizing Tours and Activities that in nature are offered as Private (for a group of people that know themselves) amongst two or more groups of people that use the computer implemented software process (either directly or in the form provided to resellers) and that do not necessarily know themselves, but are willing to join together receiving benefits (either tangible and/or intangible) from it and benefiting from all the Comfort, Intimacy and Personal Care, these kind of Tours and Activities normally offer.

Tourism Agencies up to the present date only offer conventional Ticket Based Tours or Activities and/or Private Tours or Activities not taking full advantage of what Private Tours and Activities can offer. The result is the focus on Ticket Based Tours and Activities and seldom selling Private Tours and Activities, especially if they are of a higher quality and therefore price.

This contrasts with the solution herein disclosed, and which resorts to a computer implemented Software Process Implemented using varied computing machine types and uses the Communication Networks at its disposal as a means of communication between all parties involved.

The main goal of the current application is to provide a computer programmable software Process, that enables the reduction of the average Cost per Person of these Tours and Activities making them affordable to more pockets and so increasing the potential market for them and benefits largely either the Customer that consumes the Tours and Activities and the Tour Operators seeking for a differentiated offer and higher sales and profits. In other words, the Customers benefit from a reduced cost per person, an increased Tour or Activity quality and the Tour Operators benefit from Higher Value Sales and Increase of these Sales Frequency. On the other hand, whenever one or more Resellers are involved, these also highly benefit from this technology and working process, through Lifetime Value benefits, ability to cross-sell other products they may have to the Customer and of course a direct gain of these sales, both for the establishment and their staff.

As previously mentioned, Fig. 1 discloses a possible embodiment of the overall structure and data exchange flow of the current invention.

In a proposed embodiment of the invention, the method to organize groups of customers in private tours or activities is implemented over a local or remote global communications network(s) (5) which might be connected to Application Servers (1) and/or Database Servers (2) and/or File Servers (3) and/or Machine Learning Recommendation Engine(S) and/or Machine Learning Customer and Other Entities Categorization Engine(s) (4) (also a sort of Recommendation Engine (s)). This global communications network (5) may also ensure data exchange between several Geographical Area Networks, like for example, Geographical Area #1 Network (6) and/or Geographical Area #2 Network (12) and/or Geographical Area #3 Network (13) and/or Geographical Area #n Network (14), where the reference #n represents an infinite number of possibilities.

In one embodiment of the invention, the several Geographical Area Networks are linked to Geographical Area Network Resellers, Customers and Tour Operators, particularly, Geographical Area #2 Network (12) exchanges data with Geographical Area #2 Network Resellers, Customers and Tour Operators (15), Geographical Area #3 Network (12) exchanges data with Geographical Area #3 Network Resellers, Customers and Tour Operators (16), and Geographical Area #n Network 5 (14) exchanges data with Geographical Area #n Network Resellers, Customers and Tour Operators (17).

In one embodiment of the invention, the Geographical Area #1 Network may ensure data exchange between Tour operators (11) and a set of Resellers, like for example, a Reseller #1 (7), a Reseller #2 (8) and a Reseller #n (9). The Geographical Area #1 Network also ensures data exchange with Area #1 "direct" Customers (10).

In one embodiment of the invention, Reseller #1 (7) comprises a set of Recommenders from Resellers (102) enabling connection between Customers from Resellers (101) and the Geographical Area #1 Network (6). Reseller #1 (7) also comprises a set of Reseller #1 Establishments, comprised of Reseller #1 Establishment #1 (103.1) to Reseller #1 Establishment #n (103.n) where #n can be any integer number. In one embodiment of the invention, and similarly to Reseller #1 (7), Reseller #2 (8) comprises a set of Recommenders from the Reseller (102) enabling connection between Customers from Resellers (101) and the Geographical Area #1 Network (6). Reseller #2 (8) also comprises at least a Reseller #2 Establishment #2 (104.1).

And again, in one embodiment of the invention, and similarly to Reseller #1 (7) and Reseller #2 (8), Reseller #n (9) comprises a set of Recommenders from the Reseller (102) enabling connection between Customers from Resellers (101) and the Geographical Area #1 Network (6). Reseller #n (9) also comprises a Reseller #n Establishment #n (105.n). Being #n any number ranging from #1 up to any infinite number.

Generically Fig.1 represents a possible network architecture comprising WANs (Wide Area Networks), 3G, 4G, 5G technologies or any future evolutions of these technologies, Router, Switches, DSL or Optical Fiber, LANs (Local Area Networks), using Wi-Fi, cable Ethernet, Bluetooth, etc.. In a nutshell, any technology available to carry information over the Internet, intranets, internets or any other kind of data network in a fast and reliable manner.

Additionally, it is comprised of any type of Communications and Computing Devices capable of communicating between themselves, either at the Service Offering Side or the Service Consumption Side.

In a possible embodiment of the current invention, as illustrated in Fig. 2, it comprises a set of functional layers, particularly Layer 1 (20) and Layer 2 (30). Layer 1 (1) comprises a Machine Learning Customer and Other Entities Categorization Engine (21) and/or a Timers (Given Times) Calculation Module (22) and/or an Entities (Resellers, Reseller Establishments, Resellers Staff, Resellers Customers, "Direct" Customers, Tour Operators, etc.) Notification Determination Module (23) and/or a Calculation of the Last Possible Date and the Best Common Date that a Premium Tour or Activity can Take Place Module (24). On the other hand, Layer 2 (30) comprises a Premium Tour or Activity Groups Auto-Organizing Module (31) and/or a Premium Tour or Activity Auto-Booking Module (32) and/or an Entities Benefits Calculation and Attribution Module (33).

In another possible embodiment of the current invention, as illustrated in Fig. 3, the workflow of the proposed process comprises a set of steps that enables to organize the groups of customers in private tours or activities. The step methods comprise an initial Creation of a Premium Tour or Activity by a Customer Group (40). The next step will be the Identification of what Entities to Notify Next and Notify Them (41) and the Determination and Starting of the Necessary Timers (42). Following, a step for Waiting for More Customer Groups to Join In (43) will be the flag to the next step Its Necessary to Notify More Entities (44). If so, then step Identification of what Entities to Notify Next and Notify Them (41) will be recalled, just like the following steps, mentioned earlier. If there is no need to make this repetition, the next step will be Premium Tour or Activity Has Enough Customers (45) which is followed by the Determine Best Day and Time to Book (46). Afterwards, one of two steps may occur, or a Common Day and Time is no Longer Available for Booking Notify All Relevant Parties and Refund (50) the user(s), or a Best Day and Time found, Premium Tour or activity is Booked (47) step takes place, followed by a Calculate Credits to Refund and Reseller(s) benefits (48) step, and finally a Notify All Relevant Parties (49) that the Premium Tour or Activity will take place step.

The Application Servers (1), this is where the "Core" Logic of the Computer programmable software process is located and distributed by several Ecosystem Software Components (servers, web, mobile, desktop, laptop, etc.). This can be any kind of computing machine with enough computing power for the purpose and communications capabilities to the exterior world (its own network and other networks like the Internet). It can scale up to any number of load balanced pool of servers or server farms in any kind of load balanced distributed system.

The Database Servers (2) is where data of the previously referred Application Servers use is stored. It can be one or more Database Servers. It can be an Oracle DB, Postgresql, MySql, or any other technology as long as it serves its purpose. The Database Servers can be installed in any computing machine with enough computing power for the purpose and communications capabilities to the exterior world (its own network and/or other networks). In this particular case, the Database servers do not necessarily need to be accessible by the Internet. They may only require access from the Application Servers through an internet or intranet.

The File Servers (3) are any computing machine used by the referred applications to store and distribute by the several Geographical Areas any files necessary either to the Application Servers in question, but specially necessary for the terminal or end user devices (smartphones, tablets, smartwatches, personal computers, laptops, desktops, etc.) that a user (a Customer, Reseller, Reseller Recommender or any other entity) may use to access Holiday Senses Ecosystem Software including and specially this Computer programable Software Process . Additionally, to main File Servers (3), its content can be replicated in computing machines of a CDN (Content Distribution Network) that provide files closer to the end users making file load time faster.

The Machine Learning (ML) Customer and Other Entities Categorization Engine(s) (4) uses Application, Database and File Servers, and can be installed in any computing machines with enough computing power for the purpose and communications capabilities to the exterior world (its network and other networks).

The Entities Determination and Notification is the module which is configured to determine at each notification event (ex: Creation of a Premium Tour or Activity, expiration of a Timer also referred in Use Cases as "a given time", or any other event we find relevant), the best entities to notify (ex: Customers, Reseller Establishments, Reseller Recommenders, etc.). It gathers the necessary information from the data or information made available by the Machine Learning (ML) Customer and Other Entities Categorization Engine Module and/or from the Databases serving the Applications in the Application Servers. For example, looking at the region the entity belongs to, the reseller the entity belongs to, and in case of "direct" Customers, whether he/she is active in an Area and willing to receive invitations, and so on. The full set of necessary data and information is undetermined at this time and will vary as this algorithm is enhanced and fine-tuned with time and with the enhancement and training of the Machine Learning Customer and Other Entities Categorization Engine Module.

The Timers Calculation is a module that based on the nature of the event that triggers it (ex: Creation of a Premium Tour or Activity in the system, expiration of a previous started timer, etc.) and based on the data about the environment that triggered it (ex: Geographical Area where the entities are located, the nature of the entity that created the Premium Tour or Activity, their data in the database server, their information provided by the Machine Learning Customer and Other Entities Categorization Engine Module - Customer, Customer Group, Reseller, Reseller Customer, or any other), along with the data gathered from the Tour or Activity attributes (ex: first and last possible dates and times to take place, number of Customers that already joined, Tour or Activity creation date, etc.) can infer or calculate the best moment to expire and trigger the next entities to notify (the value of the timer in may be for example minutes, seconds, hours or days, etc.). Here, also the set of data necessary for the best functioning of this module is not strictly defined and must be evaluated along with its test and production results as well as the Machine Learning Customer and Other Entities Categorization Engine enhancement.

The Best Common Date and Time and/or the Last Possible Date and Time for the Premium Tour or Activity to Take Place is a module that whenever a new Customer Creates or Joins a Premium Tour or Activity determines from the data inserted by all Customers, and checking against the availabilities for that Tour or Activity, the days and times that that Tour or Activity can take place for the biggest set of Customers of that Premium Tour or Activity. Since each Customer has their own set of days and times that they are available to Experience the Premium Tour or Activity, the best and largest possible Set of Days and Times must be determined in order to Book the best Day and Time for the best and/or largest possible number of participants to Join the Tour or Activity. If the first or some subsequent possible dates and times for given Premium Tour or Activity to take place has passed and not enough Customers have Joined it, it is also necessary to determine until when it is viable to wait for further Customers to Join and still have a successful Booking of the Premium Tour or Activity.

The Machine Learning Customer and other Entities Categorization Engine(s) Module enables categorizing the several entities that communicate amongst themselves and with the Computer-programable software Process being claimed, according to a set of data collected and present in the Database Server(s) and prepared according to Data Engineering Methods. This categorization of entities is achieved by treating and processing this data using several ML techniques. Entities are ranked in a way that they are easily interpreted and used by other software modules like the Entities Determination and Notification Software Module or Timers Calculation Software Module.

For example, Customer Rankings can be built on the data on previous Customer Purchase, Browsing History, Products or Services Reserved but not Booked, Products or Services that were marked as Favorites at some point in time, those Products or Services Contents and Attributes, all this in a Collaborative way amongst the Ecosystem Software users. From users we mean any Entity interacting with Ecosystem Software (normally a human being but can also be another Software Program Entity). The goal can be for example to determine the probability of a certain user to Join a given Premium Tour or Activity.

Also, the similarity of different Tours or Activities can be inferred (ex: by inferring the similarity of their contents like, title, description, photos, popularity, categories they fit in, Tour Operator / Provider, Tour Guide, etc.).

The goal would be for example to build a ranking of Premium Tours or Activities each user would have high probability to join.

Similarly, other entities can be categorized in similar ways. For example, Resellers and their Establishments can be categorized according to their nature, Premium Tours or Activities they have higher probability of selling, the probability of selling only amongst their own customers or if they need the cooperation of other Reseller Establishments and which ones to "close" a Premium Tour or Activity.

The possibilities here are endless. For example, it can be taken in consideration also the Reseller and/or their Establishments Recommenders, also the Tour or Activities providers, categories of their Tours and/or Activities, etc.

The Machine Learning Engine(s) described here is (are) intended to be used mainly for the purpose of increasing the probability of "closing" the Premium Tours or Activities by better addressing the Customers or Customer Groups acquired directly or by Resellers that increase the chance of a successful Booking in the shortest time possible, and not for any other generic purpose. But if any other use that suits this Computer programmable software process is found the ML Categorization Engine(s) will be used for that purpose too. Data Manipulation techniques like, but not limited to, Similarity Measures (Euclidean Distance, Pearson Correlation, Cosine Similarity, etc.) can be used. Along with Clustering Techniques like but not limited to, K-means Clustering, Spectral Clustering, Co-clustering, etc. In the same way Dimensionality Reduction techniques can be used, like but not limited to, Principal Component Analysis, Linear-discriminant Analysis, Singular Value Decomposition, etc. These fall under Unsupervised Learning.

An option can be taken by Supervised Learning, using for example K-nearest Neighbors, or even more complex algorithms. Additionally, algorithms of Classification, Ensembling and Boosting techniques can also be used.

More could be said on this, but the criteria of which Algorithms and Machine Learning Techniques to use are not fully analyzed yet. This analysis will be done as the Holiday Senses Ecosystem gathers in its Databases the proper and enough data for use in the categorization of the several entities.

A Premium Tour or Activity Auto Booking Module automates the Booking Process of any Premium Tour or Activity in the Ecosystem. Having the Premium Tour or Activity been evaluated for a Successful Booking (ex. Having enough Customers with common date(s) and time(s)), then the best Day and Time for the Booking of the referred Premium Tour or Activity to take place is determined and the Tour or Activity is Booked for that Day and Time. If meanwhile that initial Booking Day and Time has already been taken by another tour created by the Holiday Senses ecosystem or not, then the algorithm of this module moves to the next possible Date and Time and so on until it finds the first available Date and Time by the time of Booking.

Entities Benefits Calculation and Attribution Software Module when a Premium Tour or Activity is finally Booked, or in the event of Subsequent Customers joining in, determines all its Customers and Customer Groups that became "harmed" by for example being the earliest to Book (create or join) and pay ending up paying more per person than the final calculated price per person when the Premium Tour or Activity places are closed. This difference in the paid value must be somehow compensated to the "harmed" Customers. This can be attributed in credits for further use in the Ecosystem like another Tour or Activity, or for example in any additional services a Reseller may offer, or any other use that may appear during Business Development (ex: Credits to spend in partnering shops or other establishments in the Tourism Area the Customer is visiting). Of course it can not be neglected the obvious compensation, this is a refund of the extra amount paid directly to the Customer bank account using the payment method he/she used.

It is also important to set that the total refund of the paid amount to the Customer(s) bank accounts shall be done using the payment method used by them. This shall only occur if a Premium Tour or Activity does not take place for any reason (ex: minimum number of people not reached in time or bad weather conditions, etc.). These two aspects of the claim are crucial for the Business in order to increase the confidence and satisfaction of the Customers in the service described.

The calculation of benefits for the Resellers and Reseller Establishments is implemented in a Computer-programmable software method. These can result from direct sales made through these entities and are attributed to them according to and regulated by an agreement by both parties. Or can result from subsequent purchases of a customer "acquired" by that Reseller or Reseller Establishment, this is the LifeTime Value benefit referred previously. This benefit calculation and attribution is also implemented in a Computer-programmable software method and regulated by an agreement by both parties.

Finally, the Reseller Establishment Recommenders sales are also tracked by a Computer-programmable software method, and the benefits to attribute to the Reseller Establishment Recommenders informed to the Reseller Establishment. These benefits may or may be not subject to an agreement between the proprietary of the software and the Reseller or Reseller Establishment. So, in the later case, it is up to the Reseller or Reseller Establishment to attribute them to their Recommenders (chosen contact people).

The herein proposed computer implemented process to generate and join groups of users for shared private tours or activities, in one of the proposed embodiments of the invention, may be implemented using one or more processing units, one or more processing devices, any means for processing, such as a processor, a computer or a programmable hardware component being operable with accordingly adapted software. In other words, the herein described process is then executed on one or more programmable hardware components. Such hardware components may comprise a general-purpose processor, a Digital Signal Processor (DSP), a microcontroller, etc.

## Claims

1. A Computer-implemented process to Auto organize Tourism Private Tours or Activities for groups of customers in any set of geographical tourism areas comprising the steps of
Receiving a request (40) from a customer group to create a premium tour or activity in any geographical tourism area;
Identifying entities to notify (41) next in the creation process of such tours and activities and notify them;
Determining and initiating necessary timers (42) to facilitate the creation process;
Waiting for additional customer groups (43) to join in to meet participation thresholds;
Notifying additional entities (44) as needed so that the premium tour or activity gains sufficient participants (45); Determining the optimal day and time for booking (46) the premium tour or activity;
Conducting the premium tour or activity (47) at the scheduled day and time, or if a common day and time is no longer available, notifying all parties and initiating refund processes (50);
Calculating credits to Refund (48) in the event eventual different prices per person are paid by the different groups that joined and the Reseller(s) benefits;
Notifying all involved parties of successful scheduling of the Premium Tour or Activity (49), and initiating refund processes as necessary
**characterized by** comprising
a set of functional layers, layer 1 (20) and layer 2 (30), wherein
layer 2 (30) comprises a set of modules, said layer 2 being **characterized by** comprising
a Premium Tour or Activity Groups Auto-Organizing Software Module (31) joining the customer groups into any premium tour or activity, determining, from availability indications of the joined customer groups, a set of common start dates and times;
a Premium Tour or Activity Auto-Booking Software Module (32), attempting a booking at a first common start date and time and, if that date and time is unavailable at booking time, automatically selecting a next common start date and time, and if no common date and time remains, notifying all groups and initiating refunds;
an Entities Benefits Calculation and Attribution Software Module (33) configured to calculate benefits attributable to entities, including credits for Premium Tour or Activity participants;
layer 1 (20) comprises software modules, said layer 1 being **characterized by** comprising
an Entities Notification Determination Module (23) to determine the entities to notify at each instance and to support operation of the Groups Auto Organizing, Auto Booking and Entities Benefits modules;
a module that Calculates the Last Possible Date and Time and the Best Common Date and Time that the Premium Tour or Activity That Can Take Place (24), providing the Premium Tour or Activity Auto-Booking Software Module (32) with information for its subsequent performance;
a Timers Calculation Software Module (22), that determines at each instance the timer time to issue a notification to any of the entities involved;
a Machine Learning (ML) Customer and Other Entities Categorization Engine(s) (21), comprising of one or more ML (Machine Learning) Engines configures to establish relations between the data provided to them, outputting information about the entities to address at each instant in the process;
a Machine Learning (ML) Customer and Other Entities Categorization Engine(s) (21) providing information to the Entities Notification Determination Module (23) with the most relevant customers, resellers, reseller staff and reseller customers, to address or notify at each instant for each premium tour and activity, while also providing Timers (Given Times) Calculation Module (22) with information, so that it finds the timer value for addressing or for notification of any entity instance; and
a Machine Learning Customer and Other Entities Categorization Engine (21) that finds correlations from the data provided to it about the common date and time that a premium tour or activity can take place, providing the module that Calculates the Last Possible Date and Time and the Best Common Date and Time that the Premium Tour or Activity Can Take Place (24) with information necessary for optimal calculation of the last possible dates and times for a successful booking
wherein said algorithms are configured to
automatically organize the groups of customers, determining if a minimum number of customers is reached.

2. Computer-implemented process to Auto organize Tourism Private Tours or Activities for groups of customers in any set of geographical tourism areas according to previous claim 1, wherein the entities comprise Resellers, Resellers Establishments, Resellers Recommendation Staff, Reseller Customers, Tour Operators and also "direct" Customers using the company direct brand website, and/or Applications and/or Apps Software.

3. Computer-implemented process to Auto organize Tourism Private Tours or Activities for groups of customers in any set of geographical tourism areas according to previous claim 1, **characterized by** the geographical tourism area comprising a set of Geographical Area Networks, like for example, Geographical Area #1 Network (6) and/or Geographical Area #2 Network (12) and/or Geographical Area #3 Network (13) up to and/or Geographical Area #n Network (14), where the reference #n represents an infinite number of possibilities.

4. Computer-implemented process to Auto organize Tourism Private Tours or Activities for groups of customers in any set of geographical tourism areas according to previous claim 3, **characterized by** the Geographical Area Network comprising a set of Resellers, Reseller Establishments, Resellers Recommenders, Reseller Customers, Tour Operators and Area "direct" Costumers.

5. Computer-implemented process to Auto organize Tourism Private Tours or Activities for groups of customers in any set of geographical tourism areas according to previous claim 2 and 4, **characterized by** the Resellers comprising at least one Reseller establishment, one Recommender from Resellers (102) linked to Customers from Resellers (101) and up to an infinite range of #n Reseller Establishments (103.n) and #n Recommenders from Resellers (102) .

6. Computer-implemented process to Auto organize Tourism Private Tours or Activities for groups of customers in any set of geographical tourism areas according to any of the previous claims, **characterized by** being implemented locally and/or remotely over the Internet or over an internet network (5) which is connected to the set of Geographical Area Networks and which comprises Application Servers (1) and/or Database Servers (2) and/or File Servers (3) and/or Machine Learning (ML) Recommendation Engine(s) And Machine Learning (ML) Customer and Other Entities Categorization Engine(s) (4).

7. Computer-implemented process to Auto organize Tourism Private Tours or Activities for groups of customers in any set of geographical tourism areas according to any of the previous claims, **characterized by** being implemented spread up locally and/or remotely over several networks which are connected between themselves through the Internet and/or one or more internets and also connected through the Internet and/or internets to the set of Geographical Area Networks, which comprises Application Servers and/or Database Servers and/or File Servers and/or Machine Learning (ML) Recommendation System Engine(s) And Customer and other Entities Categorization Engine(s).

8. Data processing systems, **characterized by** comprising the physical means necessary for the execution of the computer-implemented process described in any one of the preceding claims.

9. Computer program, **characterized by** comprising programming code or instructions suitable for carrying out the computer-implemented process described in any of the preceding claims, in which the said computer program is stored, and is executed in one or more data processing systems, remote or in-site, for example a server, performing the respective steps described in the claims or for example distributed between one or more servers and personal computing devices (for example but not limited to, mobile Apps or personal computer applications).

10. Computer readable physical data storage device, in which the programming code or instructions of the computer program that implements the claimed process are stored.

## Patentansprüche

1. Ein computerimplementiertes Verfahren zur automatischen Organisation privater Tourismustouren -oder Aktivitäten für eine Kundengruppe in einer beliebigen Anzahl geografischer Tourismusgebiete, umfassend die folgenden Schritte:
Empfangen einer Anfrage (40) von einer Kundengruppe zur Erstellung einer Premiumtour -oder Aktivität in einem beliebigen geografischen Tourismusgebiet;
Identifizieren der zu benachrichtigenden Einheiten (41) im Rahmen des Erstellungsprozesses solcher Touren und Aktivitäten und Benachrichtigung dieser Einheiten;
Bestimmen und Starten notwendiger Timer (42) zur Vereinfachung des Erstellungsprozesses;
Warten auf das Hinzukommen zusätzlicher Kundengruppen (43), um Teilnahmeschwellenwerte zu erreichen;
Benachrichtigen zusätzlicher Einheiten (44) nach Bedarf, sodass die Premiumtour -oder Aktivität eine ausreichende Anzahl von Teilnehmern (45) erreicht;
Bestimmen des optimalen Datums und der optimalen Uhrzeit für die Buchung (46) der Premiumtour -oder Aktivität;
Ausführen der Premiumtour -oder Aktivität (47) zum geplanten Datum und zur geplanten Uhrzeit, oder, falls ein gemeinsames Datum und eine gemeinsame Uhrzeit nicht mehr verfügbar sind, Benachrichtigen aller Parteien und Einleiten von Rückerstattungsprozessen (50);
Berechnen der Rückerstattungsguthaben (48) für den Fall, dass unterschiedliche Preise pro Person von den verschiedenen teilnehmenden Gruppen gezahlt wurden und der/die Wiederverkäufer davon profitieren;
Benachrichtigen aller beteiligten Parteien über eine erfolgreiche Planung der Premiumtour -oder Aktivität (49) und Einleiten von Rückerstattungsprozessen nach Bedarf,
**dadurch gekennzeichnet, dass** es
eine Anzahl funktioneller Schichten, Schicht 1 (20) und Schicht 2 (30), umfasst,
wobei
Schicht 2 (30) eine Anzahl von Modulen umfasst, wobei die genannte Schicht 2, **dadurch gekennzeichnet ist, dass** sie
ein Softwaremodul zur automatischen Organisation von Premium-Touren oder Aktivitäten für Gruppen (31) umfasst, das die Kundengruppen einer beliebigen Premium-Tour oder Aktivität zuordnet und anhand von Verfügbarkeitsangaben der zugeordneten Kundengruppen eine Menge gemeinsamer Starttermine und -uhrzeiten bestimmt;
ein Softwaremodul zur automatischen Buchung von Premium-Touren oder Aktivitäten (32) umfasst, das versucht, eine Buchung zu einem gemeinsamen Startdatum und einer gemeinsamen Startuhrzeit vorzunehmen, und, falls dieses Datum und diese Uhrzeit zum Buchungszeitpunkt nicht verfügbar sind, automatisch ein nächstes gemeinsames Startdatum und eine nächste gemeinsame Startzeit auswählt, und, falls kein gemeinsames Datum und keine gemeinsame Uhrzeit verbleiben, alle Gruppen benachrichtigt und Rückerstattungen einleitet;
ein Softwaremodul zur Berechnung und Zuordnung von Vorteilen für die Einheiten (33) umfasst, konfiguriert zur Berechnung der auf Einheiten entfallenden Vorteile, einschließlich Guthaben für Teilnehmer einer Premiumtour -oder Aktivität;
Schicht 1 (20) eine Anzahl von Softwaremodulen umfasst, wobei die genannte Schicht 1, **dadurch gekennzeichnet ist, dass** sie ein Modul zur Bestimmung der zu benachrichtigenden Einheiten (23) umfasst, um die in jedem Fall zu benachrichtigenden Einheiten zu bestimmen und Vorgänge der Module für automatische Gruppenorganisation, automatische Buchung und Vorteile von Einheiten zu unterstützen;
ein Modul umfasst, das das letztmögliche Datum und die letztmögliche Uhrzeit und das beste gemeinsame Datum und die beste gemeinsame Uhrzeit, zu denen die Premiumtour -oder Aktivität stattfinden kann (24), berechnet, wobei das Softwaremodul zur automatischen Buchung von Premium-Touren oder Aktivitäten (32) mit Informationen für seine nachfolgende Leistung versehen ist;
ein Softwaremodul zur Berechnung von Timern (22) umfasst, das in jedem Fall den Timerzeitpunkt zur Ausführung einer Benachrichtigung einer beliebigen beteiligten Einheit bestimmt;
Machine-Learning Engine(s) zur Kategorisierung von Kunden und anderen Einheiten (21) umfasst, die eine oder mehrere ML- (Machine Learning) Engines umfassen, die konfiguriert sind, Beziehungen zwischen den ihnen bereitgestellten Daten herzustellen und Informationen über die Einheiten auszugeben, die in jedem Moment des Prozesses anzusprechen sind;
Machine-Learning Engine(s) zur Kategorisierung von Kunden und anderen Einheiten (21) umfassen, die dem Modul zur Bestimmung der zu benachrichtigenden Einheiten (23) Informationen über die relevantesten Kunden,
Wiederverkäufer, Mitarbeiter von Wiederverkäufern und Kunden von Wiederverkäufern bereitstellt, die in jedem Moment für jede Premium-Tour oder Aktivität anzusprechen oder zu benachrichtigen sind, und gleichzeitig dem Modul zur Berechnung von Timern (22) Informationen bereitstellt, sodass dieses den Timerwert für die Ansprache oder Benachrichtigung einer beliebigen Einheit bestimmt; und
Machine-Learning Engine(s) zur Kategorisierung von Kunden und anderen Einheiten (21) umfasst, die Korrelationen aus den ihr bereitgestellten Daten über das gemeinsame Datum und die gemeinsame Uhrzeit ermittelt, zu denen eine Premium-Tour oder Aktivität stattfinden kann, und dem Modul zur Berechnung des letztmöglichen Datums und der letztmöglichen Uhrzeit und des besten gemeinsamen Datums und der besten gemeinsame Uhrzeit zu der die Premiumtour -oder Aktivität stattfinden kann (24), die für die optimale Berechnung der letztmöglichen Daten und Uhrzeiten für eine erfolgreiche Buchung erforderlichen Informationen bereitstellt
wobei der genannte Algorithmus so konfiguriert ist, dass
er automatisch Kundengruppen organisiert und bestimmt, ob eine Mindestanzahl von Kunden erreicht wurde.

2. Computerimplementiertes Verfahren zur automatischen Organisation privater Tourismustouren -oder Aktivitäten für eine Kundengruppe in einer beliebigen Anzahl geografischer Tourismusgebiete nach Anspruch 1, wobei die Einheiten Wiederverkäufer, Niederlassungen von Wiederverkäufern, Empfehlungsmitarbeiter von Wiederverkäufern, Kunden von Wiederverkäufern, Reiseveranstalter sowie ,direkte' Kunden, welche die Direktmarken-Website des Unternehmens und/oder Anwendungen und/oder App-Software nutzen, umfasst.

3. Computerimplementiertes Verfahren zur automatischen Organisation privater Tourismustouren -oder Aktivitäten für Kundengruppen in einer beliebigen Anzahl geografischer Tourismusgebiete nach Anspruch 1, **dadurch gekennzeichnet, dass** das geografische Tourismusgebiet eine Menge geografischer Gebietsnetzwerke umfasst, wie beispielsweise ein Geografisches Gebiet-#1-Netzwerk (6) und/oder ein Geografisches Gebiet-#2-Netzwerk (12) und/oder ein Geografisches Gebiet-#3-Netzwerk (13) bis hin zu und/oder einem Geografischen Gebiet-#n-Netzwerk (14), wobei die Referenz #n eine unbegrenzte Anzahl von Möglichkeiten darstellt.

4. Computerimplementiertes Verfahren zur automatischen Organisation privater Tourismustouren -oder Aktivitäten für eine Kundengruppe in einer beliebigen Anzahl geografischer Tourismusgebiete nach Anspruch 3, **dadurch gekennzeichnet, dass** das geografische Gebietsnetzwerk eine Anzahl von Wiederverkäufern, Niederlassungen von Wiederverkäufern, Empfehlende von Wiederverkäufern, Kunden von Wiederverkäufern, Reiseveranstalter sowie ,direkte' Kunden eines Gebiets.

5. Computerimplementiertes Verfahren zur automatischen Organisation privater Tourismustouren -oder Aktivitäten für eine Kundengruppe in einer beliebigen Anzahl geografischer Tourismusgebiete nach Anspruch 2 und 4, **dadurch gekennzeichnet, dass** das die Wiederverkäufer mindestens eine Niederlassungen von Wiederverkäufern, ein Empfehlende von Wiederverkäufern (102), der mit Kunden von Wiederverkäufern (101) verknüpft ist und bis zu einer unbegrenzten Anzahl von #n Niederlassungen von Wiederverkäufern (103.n) sowie #n Empfehlenden von Wiederverkäufern (102).

6. Computerimplementiertes Verfahren zur automatischen Organisation privater Tourismustouren -oder Aktivitäten für eine Kundengruppe in einer beliebigen Anzahl geografischer Tourismusgebiete nach einem der vorstehenden Ansprüche, **dadurch gekennzeichnet, dass** es lokal und/oder über Internet oder über ein Internetnetzwerk (5) ferngesteuert implementiert ist, welches mit der Anzahl an geografischen Gebietsnetzwerken verbunden ist und welches Anwendungsserver (1) und/oder Datenbankserver (2) und/oder Dateiserver (3) und/oder Machine-Learning-Empfehlungs-Engine(s) sowie Machine-Learning-Engine(s) zur Kategorisierung von Kunden und anderen Einheiten (4) umfasst.

7. Computerimplementiertes Verfahren zur automatischen Organisation privater Tourismustouren -oder Aktivitäten für eine Kundengruppe in einer beliebigen Anzahl geografischer Tourismusgebiete nach einem der vorstehenden Ansprüche, **dadurch gekennzeichnet, dass** es verteilt lokal und/oder über verschiedene Netzwerke ferngesteuert implementiert ist, die untereinander über das Internet und/oder ein oder mehrere Internets verbunden sind und zusätzlich über das Internet und/oder Internets mit der Anzahl an geografischen Gebietsnetzwerken verbunden ist und welches Anwendungsserver und/oder Datenbankserver und/oder Dateiserver und/oder Machine-Learning-Empfehlungs-System-Engine(s) sowie zur Kategorisierung von Kunden und anderen Einheiten umfasst.

8. Datenverarbeitungssystem, **dadurch gekennzeichnet, dass** es physikalische Mittel notwendig für die in einem der vorstehenden Ansprüche beschriebenen Ausführung computerimplementierter Verfahren umfasst.

9. Computerprogramm, **dadurch gekennzeichnet, dass** es einen Programmcode oder Anweisungen umfasst, die dafür geeignet sind, das in einem der vorstehenden Ansprüche beschriebene computerimplementierte Verfahren durchzuführen, in dem das genannte Computerprogramm in einem oder mehreren Datenverarbeitungssystemen, lokal oder ferngesteuert, z.B. auf einem Server, gespeichert ist und ausgeführt wird und die jeweiligen in den Ansprüchen beschriebenen Schritte durchführt, oder z.B. verteilt auf einen oder mehrere Server und persönliche Rechnervorrichtungen (zum Beispiel, aber nicht beschränkt auf, mobile Apps oder PC-Anwendungen) ausgeführt wird.

10. Computerlesbares physikalisches Datenspeichergerät, in dem der Programmcode oder die Anweisungen des Computerprogramms gespeichert sind, welches das beanspruchte Verfahren implementiert.

## Revendications

1. Un procédé mis en œuvre par ordinateur pour organiser automatiquement des visites privées touristiques ou des activités pour des groupes de clients dans tout ensemble de zones géographiques touristiques, comprenant les étapes de
Recevoir une demande (40) d'un groupe de clients pour créer une visite ou une activité premium dans n'importe quelle zone géographique touristique ;
Identifier les entités à notifier (41) ensuite dans le procédé de création de telles visites et activités et les notifier ;
Déterminer et initier les minuteries nécessaires (42) pour faciliter le procédé de création ;
Attendre que des groupes de clients supplémentaires (43) se joignent afin d'atteindre les seuils de participation ;
Notifier des entités supplémentaires (44) selon les besoins afin que la visite ou l'activité premium obtienne un nombre suffisant de participants (45) ;
Déterminer le jour et l'heure optimaux pour la réservation (46) de la visite ou de l'activité premium ;
Réaliser la visite ou l'activité premium (47) au jour et à l'heure prévus, ou, si un jour et une heure commune ne sont plus disponibles, notifier toutes les parties et initier les procédé de remboursement (50) ;
Calculer les crédits à rembourser (48) dans le cas où des prix par personne éventuellement différents sont payés par les différents groupes qui se sont joints et où le(s) revendeur(s) en bénéficient ;
Notifier toutes les parties impliquées de la planification réussie de la visite ou activité premium (49), et initier les procédé de remboursement selon les besoins
**caractérisé en ce qu'**il comprend
un ensemble de couches fonctionnelles, la couche 1 (20) et la couche 2 (30), dans lequel
la couche 2 (30) comprend un ensemble de modules, ladite couche 2 étant **caractérisée en ce qu'**elle comprend
un module logiciel premium d'auto organisation pour groupes de visites ou d'activités (31) réunir les groupes de clients dans toute visite ou activité premium, déterminer, à partir des indications de disponibilité des groupes de clients réunis, un ensemble de dates et d'heures de début communes ;
un Module Logiciel d'auto-réservation de visite ou activité premium (32), tentant une réservation à une première date et heure de début communes et, si cette date et cette heure ne sont pas disponibles au moment de la réservation, sélectionnant automatiquement une date et une heure de début communes suivantes, et, si aucune date et heure communes ne restent, notifiant tous les groupes et initiant les remboursements ;
un module logiciel de calcul et d'attribution des bénéfices des entités (33) configuré pour calculer les bénéfices attribuables aux entités, y compris les crédits pour les participants à la visite ou activité premium ;
la couche 1 (20) comprend des modules logiciels, ladite couche 1 étant **caractérisée en ce qu'**elle comprend
un module de détermination de notification des entités (23) pour déterminer les entités à notifier à chaque instance et pour soutenir le fonctionnement des modules d'auto-organisation des groupes, d'auto-réservation et des bénéfices des entités ;
un module qui calcule la dernière date et heure possibles ainsi que la meilleure date et heure communes auxquelles la visite ou activité premium peut avoir lieu (24), fournissant au module logiciel d'auto-réservation de la visite ou activité premium (32) les informations nécessaires à son exécution ultérieure ;
un module logiciel de calcul des minuteries (22), qui détermine à chaque instance la durée de la minuterie pour émettre une notification à l'une quelconque des entités impliquées ;
un ou plusieurs moteurs de catégorisation par apprentissage automatique (ML) des clients et des autres entités (21), comprenant un ou plusieurs moteurs ML (d'apprentissage automatique) configurés pour établir des relations entre les données qui leur sont fournies, produisant des informations concernant les entités à adresser à chaque instant du procédé ;
un moteur de catégorisation par apprentissage automatique (ML) des clients et des autres entités (21) fournissant au module de détermination de notification des entités (23) des informations concernant les clients, revendeurs, membres du personnel des revendeurs et clients des revendeurs les plus pertinents à adresser ou notifier à chaque instant pour chaque visite ou activité premium, tout en fournissant également au module de calcul des minuteries (temps donnés) (22) des informations lui permettant de déterminer la valeur de la minuterie pour l'adressage ou la notification de toute instance d'entité ; et
un moteur de catégorisation par apprentissage automatique des clients et des autres entités (21) qui identifie des corrélations à partir des données qui lui sont fournies concernant la date et l'heure communes auxquelles une visite ou activité premium peut avoir lieu, fournissant au module qui calcule la dernière date et heure possibles et la meilleure date et heure communes auxquelles la visite ou activité premium peut avoir lieu (24) les informations nécessaires pour un calcul optimal des dernières dates et heures possibles pour une réservation réussie
dans lequel lesdits algorithmes sont configurés pour
organiser automatiquement les groupes de clients, en déterminant si un nombre minimum de clients est atteint.

2. Procédé mis en œuvre par ordinateur pour organiser automatiquement des visites ou activités touristiques privées pour des groupes de clients dans tout ensemble de zones géographiques touristiques selon la revendication précédente 1, dans lequel les entités comprennent des revendeurs, des établissements de revendeurs, du personnel de recommandation des revendeurs, des clients de revendeurs, des tour opérateurs ainsi que des clients "directs" utilisant le site web de la marque directe de la société et/ou des applications et/ou des logiciels d'applications.

3. Procédé mis en œuvre par ordinateur pour organiser automatiquement des visites ou activités touristiques privées pour des groupes de clients dans tout ensemble de zones géographiques touristiques selon la revendication précédente 1, **caractérisé en ce que** la zone géographique touristique comprend un ensemble de réseaux de zones géographiques, comme par exemple le réseau de Zone géographique #1 (6) et/ou le réseau de zone géographique #2 (12) et/ou le réseau de zone géographique #3 (13) jusqu'au réseau de zone géographique #n (14), la référence #n représentant un nombre infini de possibilités.

4. Procédé mis en œuvre par ordinateur pour organiser automatiquement des visites ou activités touristiques privées pour des groupes de clients dans tout ensemble de zones géographiques touristiques selon la revendication précédente 3, **caractérisé en ce que** le réseau de zone géographique comprend un ensemble de revendeurs, d'établissements de revendeurs, de recommandeurs de revendeurs, de clients de revendeurs, de tour opérateurs et de clients "directs" de la zone.

5. Procédé mis en œuvre par ordinateur pour organiser automatiquement des visites ou activités touristiques privées pour des groupes de clients dans tout ensemble de zones géographiques touristiques selon les revendications précédentes 2 et 4, **caractérisé en ce que** les revendeurs comprennent au moins un établissement de revendeur, un recommandeur provenant des revendeurs (102) lié à des clients provenant des revendeurs (101), et jusqu'à une gamme infinie d'établissements de revendeurs #n (103.n) et de recommandeurs #n provenant des revendeurs (102).

6. Procédé mis en œuvre par ordinateur pour organiser automatiquement des visites ou activités touristiques privées pour des groupes de clients dans tout ensemble de zones géographiques touristiques selon l'une quelconque des revendications précédentes, **caractérisé en ce qu'**il est mis en œuvre localement et/ou à distance via internet ou via un réseau internet (5) connecté à l'ensemble des réseaux de zones géographiques et comprenant des serveurs d'applications (1) et/ou des serveurs de bases de données (2) et/ou des serveurs de fichiers (3) et/ou des moteurs d'apprentissage automatique (ML) de recommandation et des moteurs d'apprentissage automatique (ML) de catégorisation des clients et des autres entités (4).

7. Procédé mis en œuvre par ordinateur pour organiser automatiquement des visites ou activités touristiques privées pour des groupes de clients dans tout ensemble de zones géographiques touristiques selon l'une quelconque des revendications précédentes, **caractérisé en ce qu'**il est mis en œuvre de manière répartie localement et/ou à distance sur plusieurs réseaux qui sont interconnectés entre eux via internet et/ou un ou plusieurs internets, et également connectés via internet et/ou des internets à l'ensemble des réseaux de zones géographiques, lesquels comprennent des serveurs d'applications et/ou des serveurs de bases de données et/ou des serveurs de fichiers et/ou des moteurs d'apprentissage automatique (ML) du système de recommandation ainsi que des moteurs de catégorisation des clients et des autres entités.

8. Systèmes de traitement de données, **caractérisés en ce qu'**ils comprennent les moyens physiques nécessaires à l'exécution du procédé mis en œuvre par ordinateur décrit dans l'une quelconque des revendications précédentes.

9. Programme informatique, **caractérisé en ce qu'**il comprend du code de programmation ou des instructions propres à exécuter le procédé mis en œuvre par ordinateur décrit dans l'une quelconque des revendications précédentes, ledit programme informatique étant stocké et exécuté dans un ou plusieurs systèmes de traitement de données, à distance ou sur site, par exemple un serveur, réalisant les étapes respectives décrites dans les revendications, ou, à titre d'exemple, réparti entre un ou plusieurs serveurs et des dispositifs informatiques personnels (par exemple, sans s'y limiter, des applications mobiles ou des applications pour ordinateurs personnels).

10. Dispositif physique de stockage de données lisible par ordinateur, dans lequel sont stockés le code de programmation ou les instructions du programme informatique mettant en œuvre le procédé revendiqué.
